# DEMANDE DE BREVET EUROPEEN

(11) **EP 3 936 220 A1**
(43) Date de publication de la demande: **12.01.2022**
(21) Numéro de dépôt: 21183805.7
(22) Date de dépôt: 05.07.2021
(51) Int. Cl.: B01D 53/14, B01D 53/18, B01D 53/50

(54) **INSTALLATION ET PROCÉDÉ D'ÉPURATION PAR VOIE HUMIDE DE FUMÉES D'ÉCHAPPEMENT D'UN MOTEUR D'UN NAVIRE MARIN**

(30) Priorité: 06.07.2020 FR 2007137
(71) Demandeur: LAB, 69007 Lyon (FR)
(72) Inventeur: SIRET, Bernard, 69800 SAINT-PRIEST (FR); VUONG, François, 83400 HYÈRES (FR)
(74) Mandataire: Lavoix

(57) **Abrégé**

Cette installation comprend un laveur (100) et un dispositif de distribution (300) pour distribuer de l'eau sous forme d'une pluie (P) qui tombe dans le laveur. Un plateau (400), agencé entre l'arrivée des fumées et le dispositif de distribution et incliné de sorte que l'eau de la pluie tombe sur le plateau et y forme un film d'eau (F) ruisselant sur le plateau depuis une partie haute (400A) jusqu'à une partie basse (400B) du plateau, est muni de perforations (402) de sorte que les fumées traversent le plateau via les perforations en étant, à la fois, réparties de manière homogène sur la section transversale du laveur et mises en contact avec le film d'eau en formant des jets (J). De plus, un dispositif de récupération (500), agencé en totalité à l'intérieur du laveur et situé entre le plateau et le dispositif de distribution, court sur une paroi latérale (102) du laveur suivant une direction périphérique au laveur, en incluant successivement une partie collectrice (510), qui est en pente et qui reçoit et canalise de l'eau ruisselant depuis la paroi latérale, et un déversoir (520), qui est situé à l'aplomb vertical de la partie haute du plateau et qui, à l'intérieur du laveur, déverse et distribue sur cette partie haute l'eau canalisée dans la partie collectrice.

## Description

La présente invention concerne une installation et un procédé d'épuration par voie humide de fumées d'échappement d'un moteur d'un navire marin.

Les navires marins, qui assurent notamment soit le transport de fret, comme les porte-conteneurs, soit le transport de passagers, comme les ferries ou les navires de croisière, sont généralement propulsés par des moteurs diesel qui sont une source de pollution importante, notamment une source de dioxyde de soufre (SO₂) qui est le principal responsable des pluies acides. Les émissions de dioxyde de soufre sont liées à la présence de soufre dans les carburants utilisés par ces moteurs diesel. Les règlementations maritimes tendent à limiter de plus en plus les émissions de dioxyde de soufre dans les fumées rejetées à l'atmosphère par les navires. Pour respecter ces limitations, deux solutions principales sont envisageables : ou bien on utilise un carburant à très basse teneur en soufre, ou bien on utilise un carburant plus soufré et on opère des systèmes de traitement pour éliminer le dioxyde de soufre résultant de la combustion du soufre dans les moteurs marins.

Des alternatives existent, comme celles basées sur l'utilisation de moteurs électriques ou bien de moteurs dont le carburant est du gaz liquéfié ou du méthanol. Toutefois, ces alternatives présentent des inconvénients substantiels, tant techniques qu'économiques.

L'utilisation d'un combustible peu soufré est pratique et peu onéreuse en termes d'investissement, mais souffre d'inconvénients. En particulier, il existe un différentiel de prix important entre le prix d'un fuel peu soufré et le prix d'un fuel de qualité marine courante, ce qui a un impact économique appréciable. D'autre part, il y a des zones de navigation où les contraintes environnementales sont différentes, en étant notamment plus permissives que dans les ports ou certaines zones côtières.

Le traitement des fumées par voie sèche ou par voie humide n'a pas ces inconvénients puisqu'il peut être arrêté ou opéré dans une mode d'épuration plus ou moins poussée.

L'utilisation d'un épurateur sec, de type filtre à manches et utilisant par exemple du bicarbonate de sodium, est techniquement possible. L'investissement peut être plus limité que pour une installation d'épuration par voie humide, mais cette solution souffre de plusieurs inconvénients. En particulier, il faut manipuler des réactifs solides et évacuer des résidus solides, de faible masse volumique. Le coût du réactif est important, tout comme celui lié à l'évacuation au port et au traitement des résidus solides. Pour ces raisons, cette solution est peu employée.

La solution de référence pour l'épuration des fumées pour l'activité marine reste donc le traitement par voie humide, qui est opérée sélectivement en boucle ouverte ou en boucle fermée. A cet effet, on utilise un laveur, qui est embarqué sur le navire et dans lequel est dispersé un liquide de lavage ad hoc, usuellement à base d'eau de mer dont l'alcalinité naturelle est mise à profit pour neutraliser le dioxyde de soufre. Par la suite, dans tout le reste du document, ce liquide de lavage est appelée « eau », étant entendu que ce terme « eau » correspond à la liqueur aqueuse, à l'état liquide, qui sert à l'épuration de fumées dans un laveur, cette eau étant usuellement de l'eau de mer, à laquelle a pu être ajouté un réactif de neutralisation comme de la soude (NaOH), de la magnésie (MgO, Mg(OH)₂) ou de la chaux (Ca(OH)₂), et qui peut également contenir des sels, résultant de l'épuration des fumées, et d'autres solides. Cette eau est pulvérisée en haut de l'intérieur du laveur, tandis que les fumées d'échappement à épurer sont admises en bas de l'intérieur du laveur : l'eau pulvérisée tombe dans le laveur sous forme d'une pluie qui rencontre les fumées ascendantes qui, au contact de l'eau, sont épurées par transfert des polluants, en particulier le dioxyde de soufre, qu'elles contiennent. Ce type d'installation d'épuration par voie humide a l'avantage d'être simple à opérer et les pertes de charge engendrées restent faibles.

Toutefois, ces laveurs à eau en pluie peuvent connaître une problématique liée à l'écoulement des fumées à l'intérieur du laveur car une hétérogénéité de cet écoulement conduit à des performances de lavage plus faibles. Pour remédier à cette problématique, il est techniquement possible d'utiliser, à l'intérieur du laveur, un plateau horizontal, qui est placé entre l'entrée des fumées dans le laveur et le système de pulvérisation de l'eau en pluie. Ce plateau est muni de perforations par lesquelles les fumées montant dans le laveur passent, ce qui les répartit de manière sensiblement homogène sur la section transversale du laveur. Le profil du flux des fumées dans le laveur est ainsi rectifié, mais au prix d'une perte de charge considérable puisqu'il se crée, sur le plateau, une couche de liquide aéré ou de mousse dense assez épaisse, qui se maintient sous une forme quasi fluidisée. Une telle perte de charge est malvenue car elle conduit à une réduction des performances du moteur marin, quand ce n'est pas son arrêt par étouffement.

Une autre problématique des laveurs à eau en pluie est liée au fait que les gouttes de la pluie doivent être dispersées de manière la plus homogène possible sur la section transversale du laveur, pour éviter que les fumées ne montent dans le laveur en s'écoulant par des passages leur offrant moins de résistance à l'écoulement, et pour couvrir le plus largement possible la section transversale du laveur, en évitant les zones à faible densité d'eau. Il est alors inévitable qu'une partie significative de l'eau, souvent supérieure à 10%, se retrouve à la paroi latérale du laveur, qui est une zone du laveur où les transferts sont réduits. En effet, la paroi latérale du laveur étant humide, certaines des gouttes de la pluie projetée vers le bas finissent par coalescer avec le film d'eau ruisselant à la surface de cette paroi latérale. Ce film d'eau n'offre que peu de surface d'échange avec les fumées, si bien que, sans être totalement perdue, l'eau de ce film n'est que très piètrement utilisée. Pour remédier à cette problématique, il est connu de munir la paroi latérale du laveur d'un ou de plusieurs cerclages intérieurs. Chacun de ces cerclages court horizontalement sur toute la périphérie du laveur et forme un obstacle à l'eau ruisselant sur la paroi latérale, de manière à décoller de cette paroi latérale une partie de l'eau du film précité et ainsi la renvoyer vers l'intérieur du laveur de manière homogène suivant la périphérie du laveur. L'intérêt pratique de ces cerclages reste limité, dans le sens où l'amélioration sur l'épuration des fumées est marginale et où l'eau renvoyée vers l'intérieur conduit à augmenter l'épaisseur de la couche de liquide ou de mousse sur le plateau perforé horizontal mentionné plus haut.

CN 105 817 121, qui ne s'intéresse pas spécifiquement au domaine des laveurs marins, divulgue un procédé et installation d'épuration de fumées par voie humide. Les fumées à épurer sont admises à la base d'un laveur et montent à l'intérieur de ce laveur pendant que de l'eau est distribuée à l'intérieur du laveur et y tombe sous forme d'une pluie, à contre-courant des fumées. Une plaque est agencée à l'intérieur du laveur, en séparant ce dernier en deux compartiments distincts, à savoir un compartiment inférieur, dans lequel les fumées sont admises dans le laveur, et un compartiment supérieur dans lequel la pluie est distribuée. Cette plaque occupe toute la section transversale du laveur et est inclinée, de sorte que l'eau de la pluie, une fois tombée sur la face supérieure de la plaque, ruisselle jusqu'à un bord d'extrémité inférieure de la plaque où toute l'eau est récupérée dans un réacteur qui est extérieur au laveur. Dans ce réacteur, les sulfites de l'eau sont oxydés en sulfate, avant que l'eau ainsi acidifiée soit renvoyée dans le fond du laveur en vue d'alimenter la distribution de la pluie. La plaque précitée est pourvue de perforations reliant les faces supérieure et inférieure de la plaque. Le débouché supérieur de chaque perforation est bordé par un conduit tubulaire qui s'élève à la verticale depuis la face supérieure de la plaque, en étant soudé à cette dernière. Ces conduits tubulaires canalisent intérieurement l'écoulement des fumées au travers de la plaque, tout en formant des obstacles étanches au ruissellement de l'eau sur la face supérieure de la plaque.

WO 2014/056985, qui ne s'intéresse pas non plus au domaine des laveurs pour les moteurs des navires marins, divulgue une installation de désulfuration à l'eau de mer. Cette installation comprend un laveur et un réacteur d'oxydation qui est extérieur au laveur. Les fumées à désulfurer, qui sont introduites à la base du laveur par un conduit, s'écoulent vers le haut à l'intérieur du laveur d'abord dans une section de dépoussiérage, où les poussières, les suies et les métaux lourds présents dans les fumées sont captés par de l'eau de mer pulvérisée par des premières buses, puis dans une section d'absorption, où les oxydes de soufre contenus dans les fumées sont captés par de l'eau de mer pulvérisée par des secondes buses. Pour empêcher que l'eau chargée en oxyde de soufre n'atteigne la section de dépoussiérage, toute l'eau pulvérisée par les secondes buses est, en bas de la section d'absorption, collectée par un collecteur. Un régleur de débit se présentant sous la forme d'une plaque horizontale perforée peut être agencé entre le collecteur et les secondes buses. Dans tous les cas, le collecteur est constitué de conduites en U, agencées en décalé les unes par rapport aux autres, et est incliné par rapport à l'horizontal de sorte que l'eau qu'il collecte ruisselle jusqu'à une partie basse du collecteur, d'où l'eau est sortie du laveur pour être envoyée dans le réacteur d'oxydation.

JP 2003 181241 divulgue une installation de désulfuration de gaz de combustion, par voie humide. Cette installation comporte un laveur, dans lequel les gaz à désulfurer sont admis par un conduit et dans lequel un liquide de lavage est pulvérisé depuis le sommet du laveur par des buses. Le liquide de lavage est, en bas du laveur, collecté dans un bac dans lequel de l'air est injecté pour former des bulles dans le liquide du bac afin d'y oxyder les sulfites en sulfates. Les bulles induisent la formation d'une couche de mousse. Le liquide de lavage ruisselant sur la paroi intérieure du laveur est collecté par une gouttière, qui est située sous le débouché du conduit précité. Cette gouttière est inclinée par rapport à l'horizontale de manière à canaliser l'eau jusqu'à des descentes d'évacuation verticales, qui s'étendent au travers de la couche de mousse et qui débouchent ainsi sous la surface du liquide contenu dans le bac. L'épaisseur de la couche de mousse est ainsi limitée, en évitant que le liquide de lavage ruisselant sur la paroi intérieure du laveur ne provoque des remous et éclaboussures en atteignant la surface du liquide contenu dans le bac.

JP H11 33352 divulgue une installation de désulfuration, comprenant un laveur dans lequel des fumées à désulfurer sont introduites par un conduit pour circuler dans le laveur à contre-courant d'une pluie d'eau pulvérisée depuis le sommet du laveur par des premières buses. Le laveur est intérieurement équipé, entre le débouché du conduit et les premières buses, d'une gouttière qui collecte l'eau ruisselant sur la paroi intérieure du laveur. La gouttière est inclinée par rapport à l'horizontale de manière à canaliser l'eau qu'elle collecte, jusqu'à un point bas de la gouttière d'où l'eau collectée sort du laveur pour rejoindre un bac qui est extérieur au laveur et est supporté par le conduit. L'eau accumulée dans le bac sert à alimenter des secondes buses qui pulvérisent l'eau en travers du débouché du conduit afin d'améliorer la désulfuration des fumées.

Le but de la présente invention est de proposer des aménagements pour un laveur marin à eau en pluie, qui, tout en étant simples et économiques, permettent d'améliorer les performances d'épuration de ce laveur.

A cet effet, l'invention a pour objet une installation d'épuration par voie humide de fumées d'échappement d'un moteur d'un navire marin, telle que définie à la revendication 1.

L'invention a également pour objet un procédé d'épuration par voie humide de fumées d'échappement d'un moteur d'un navire marin, tel que défini à la revendication 14. Ce procédé peut avantageusement être mis en oeuvre par l'installation définie ci-dessus.

Ainsi, l'invention prévoit, à l'intérieur d'un laveur à eau en pluie, d'utiliser un plateau perforé qui n'est pas horizontal, mais qui est incliné de sorte que l'eau tombant en pluie sur ce plateau y ruisselle par gravité depuis une partie haute jusqu'à une partie basse du plateau, en formant un film d'eau recouvrant la face supérieure du plateau, sur laquelle débouchent les perforations du plateau. Moyennent un dimensionnement ad hoc, tant individuel que collectif, de ces perforations, en lien avec la vitesse des fumées s'écoulant dans le laveur, l'eau du film ruisselant sur le plateau ne s'écoule pas vers le bas au travers des perforations, sauf pour une quantité de cette eau qui est marginale et qui forme un pleurage limité, mais est, au contraire, projetée en partie vers le haut sous forme de jets générés par la rencontre entre l'écoulement des fumées dans les perforations et le film d'eau ruisselant sur le plateau. Un transfert gaz-liquide accru est opéré dans ces jets, ce qui revient à dire que le lavage des fumées y est renforcé. Dans le même temps, le profil de vitesse des fumées en aval du plateau, autrement dit au-dessus du plateau, est homogénéisé puisque les fumées montant à l'intérieur du laveur depuis le conduit les ayant admis dans la partie basse du laveur atteignent la face inférieure du plateau, au niveau de laquelle elles sont forcées de se répartir pour poursuivre leur progression vers le haut au travers du plateau, via les perforations de ce dernier. Cela est gage d'une bonne épuration des fumées en aval du plateau par contact avec la pluie distribuée au-dessus. Cet effet d'homogénéisation du profil de vitesse des fumées résulte ainsi de la perte de charge induite par le plateau et par le film d'eau ruisselant sur ce dernier. L'invention permet de maîtriser cette perte de charge, qui est par exemple comprise entre 50 Pa et 800 Pa, en jouant, notamment, sur le dimensionnement individuel et collectif des perforations du plateau, ainsi que sur l'épaisseur du film d'eau, qui est directement liée à l'inclinaison du plateau. En particulier, cette parte de charge est bien moindre que celle induite par un plateau perforé horizontal.

De plus, l'invention prévoit d'utiliser astucieusement l'eau ruisselant sur la paroi latérale du laveur, en en collectant au moins une partie pour la déverser spécifiquement sur la partie haute du plateau, et ce grâce à un dispositif de récupération ad hoc. Ce dispositif de récupération est situé entre le plateau et le dispositif de distribution de l'eau en pluie et court sur la face intérieure de la paroi latérale du laveur suivant une direction périphérique au laveur, en permettant à l'intérieur du laveur, à la fois, de collecter de l'eau ruisselant sur la paroi latérale par une partie de collecte du dispositif de récupération, dans laquelle, à la façon d'une gouttière, l'eau collectée s'écoule de manière canalisée par effet de pente, puis de distribuer par effet gravitaire cette eau collectée sur la partie haute du plateau par un déversoir du dispositif de récupération, prévu à l'aplomb vertical de cette partie haute du plateau. En pratique, diverses formes de réalisation sont envisageables pour la partie collectrice et le déversoir du dispositif de récupération, comme détaillé par la suite. Dans tous les cas, l'eau ruisselant sur la paroi latérale du laveur, qui, en l'absence du dispositif de récupération, n'assurerait qu'un effet très marginal sur l'épuration des fumées comme expliqué précédemment, est utilisée pour rectifier l'inhomogénéité de densité du film d'eau s'écoulant sur le plateau : cette inhomogénéité tient à l'inclinaison du plateau puisque, en l'absence du dispositif de récupération, la partie haute du plateau ne recevrait que la portion de la pluie tombant directement sur cette partie haute, alors que la partie basse cumule la portion de la pluie tombant directement sur cette partie basse et le flux d'eau ruisselant jusqu'à cette partie basse depuis la partie haute du plateau. En amenant plus d'eau sur la partie haute du plateau grâce au dispositif de récupération, on augmente la quantité d'eau qui séjourne le plus longuement sur le plateau et on augmente donc de manière correspondante les possibilités d'échange de matière avec les fumées passant par les perforations du plateau.

Ainsi, grâce à des aménagements simples et économiques, l'installation et le procédé conformes à l'invention présentent des performances d'épuration remarquables, dans le sens où l'efficacité du lavage est améliorée ou bien, ce qui revient au même, la consommation énergétique liée au pompage de l'eau est réduite pour des performances de lavage imposées.

Des caractéristiques additionnelles avantageuses de l'invention, qui sont relatives à l'installation tout en étant applicables au procédé, sont spécifiées aux revendications 2 à 13.

L'invention sera mieux comprise à la lecture de la description qui va suivre, donnée uniquement à titre d'exemple et faite en se référant aux dessins sur lesquels :
- [Fig 1] la figure 1 est une section schématique d'une installation conforme à l'invention et mettant en œuvre un procédé conforme à l'invention ;
- [Fig 2] la figure 2 est une coupe schématique selon la ligne II-II de la figure 1 ;
- [Fig 3] la figure 3 est une coupe schématique selon la ligne III-III de la figure 2 ;
- [Fig 4] la figure 4 est une vue similaire à la figure 3, illustrant une variante de l'installation ;
- [Fig 5] la figure 5 est une vue similaire à la figure 3, illustrant une autre variante de l'installation ;
- [Fig 6] la figure 6 est une coupe partielle en perspective, selon la ligne VI-VI de la figure 2 ;
- [Fig 7] la figure 7 est une vue en élévation selon la flèche VII de la figure 6 ;
- [Fig 8] la figure 8 est une vue similaire à la figure 2, illustrant une variante de l'installation ;
- [Fig 9] la figure 9 est une coupe partielle en perspective selon la ligne IX-IX de la figure 8 ;
- [Fig 10] la figure 10 est une vue similaire à la figure 9, illustrant une variante de l'installation ; et
- [Fig 11] la figure 11 est un graphique illustrant des performances de lavage.

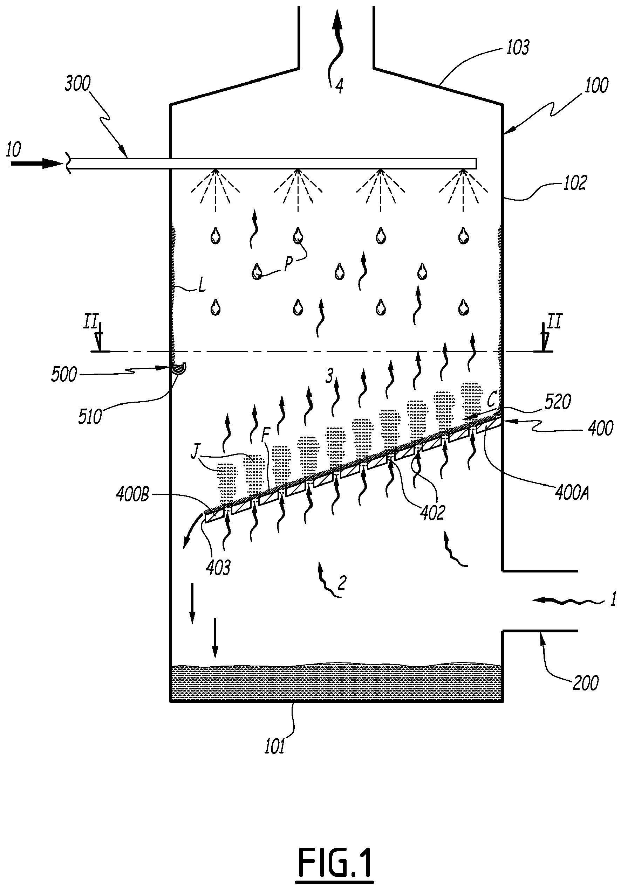

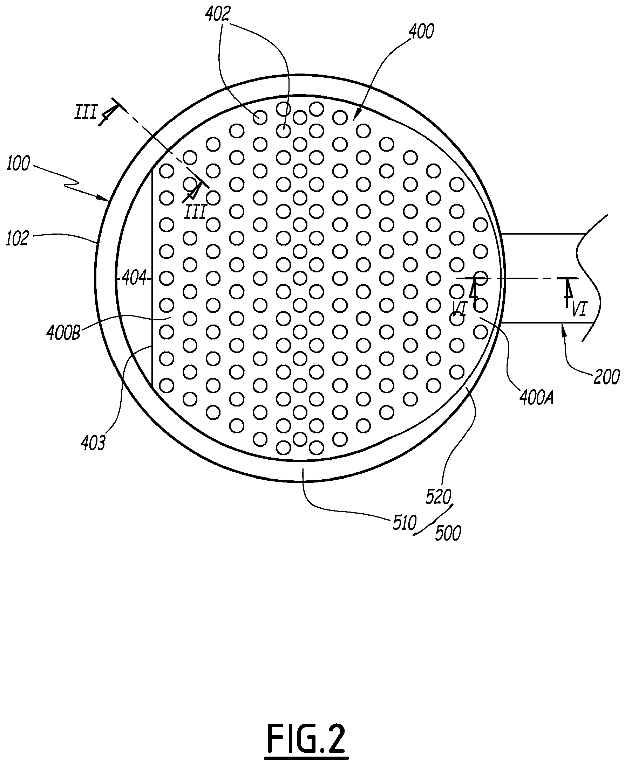

Sur les figures 1 et 2 est représentée une installation permettant d'épurer, en particulier de désulfurer, des fumées d'échappement 1 émises par un moteur diesel assurant la propulsion d'un navire marin sur lequel est embarquée cette installation. Les fumées 1 contiennent divers polluants, dont du dioxyde de soufre (SO2).

Au niveau de l'installation des figures 1 et 2, les fumées 1, qui proviennent de la sortie d'échappement du moteur précité et qui peuvent avoir fait l'objet d'une dénitrification et/ou d'un dépoussiérage préalable, sont introduites dans un laveur 100 par un conduit 200.

Comme représenté schématiquement sur les figures 1 et 2, le laveur 100 se présente globalement sous la forme d'une tour qui, en service, s'étend en longueur à la verticale. A sa base, le laveur 100 présente un fond 101 depuis lequel s'élève une paroi latérale 102 du laveur, se terminant par un sommet 103. La paroi latérale 102 du laveur 100 définit un axe géométrique central et délimite la section transversale du laveur 100 : lorsque le laveur 100 est en service, l'axe géométrique précité s'étend à la verticale et la section transversale précitée est horizontale. Comme bien visible sur la figure 2, dans la forme de réalisation des figures 1 et 2, la section transversale du laveur 100 est circulaire, mais cette géométrie n'est pas limitative de l'invention. A titre d'exemple, la paroi latérale 102 présente un diamètre intérieur compris entre 2 et 8 m.

Comme bien visible sur la figure 1, le conduit 200 débouche latéralement dans le laveur 100, à la base de ce dernier, autrement dit un peu au-dessus du fond 101 du laveur 100. Le débouché du conduit 200 dans le laveur 100 est ainsi situé bien plus près verticalement du fond 101 que du sommet 103 du laveur 100.

Le débouché du conduit 200 est délimité au travers de la paroi latérale 102 en occupant seulement une portion périphérique limitée du laveur 100, comme bien visible sur la figure 2. En alternative non représentée, le débouché du conduit 200 débouche verticalement dans le laveur 100, à travers son fond 101.

En service, les fumées 1, admises par le conduit 200 à la base du laveur 100, circulent de manière ascendante à l'intérieur du laveur 100, depuis le fond 101 de ce dernier jusqu'à son sommet 103.

Comme représenté schématiquement sur la figure 1, le laveur 100 est intérieurement pourvu d'un dispositif de distribution 300, prévu en haut du laveur, en étant notamment situé, au moins pour partie, plus près verticalement du sommet 103 que du fond 101. Ce dispositif de distribution 300 est prévu pour être alimenté avec de l'eau 10 et est conçu pour distribuer, par exemple par pulvérisation, cette eau à l'intérieur du laveur 100 sous forme d'une pluie P, c'est-à-dire sous forme de gouttes tombant vers le bas dans le laveur 100.

Le dispositif de distribution 300 relève d'une technologie connue en soi, qui ne sera pas détaillée ici plus avant. Ainsi, la forme de réalisation du dispositif de distribution 300 n'est pas limitative de l'invention du moment que la pluie P que ce dispositif produit à l'intérieur du laveur 100 couvre sensiblement toute la section transversale de ce laveur en dessous du dispositif de distribution 300. On notera que, dans tous les cas, une partie de la pluie P se retrouve inévitablement à la paroi latérale 102 du laveur 100, en y étant soit directement projetée par le dispositif de distribution 300, soit en y étant transportée par les turbulences gazeuses à l'intérieur du laveur 100. Cette partie de la pluie P, qui peut représenter entre 10% et 30% du flux total d'eau délivrée par le dispositif de distribution 300 à l'intérieur du laveur 100, forme un film d'eau L sur la surface intérieure de la paroi latérale 102, comme illustré schématiquement sur la figure 1. Ce film L est constituée d'eau qui, par gravité, ruisselle vers le bas sur la paroi latérale 102.

Comme représenté schématiquement sur les figures 1 et 2, le laveur 100 est également intérieurement pourvu d'un plateau 400. Suivant la verticale, le plateau 400 est situé entre le débouché du conduit 200 et le dispositif de distribution 300. Le plateau 400 est donc logé dans le volume libre du laveur 100, délimité entre le débouché du conduit 200 et le dispositif de distribution 300, étant remarqué que le plateau 400 occupe une très petite partie de ce volume libre, le reste de ce dernier étant essentiellement vide dans le sens où il est dépourvu d'un garnissage ou d'une structure interne similaire, sans toutefois exclure la présence d'aménagements internes ponctuels qui ne s'étendraient pas substantiellement en travers du laveur.

Le plateau 400 est agencé en travers de la circulation ascendante des fumées à l'intérieur du laveur 100. Le plateau 400 présente ainsi une face supérieure, sur laquelle la pluie P tombe, et une face inférieure qu'atteignent les fumées, référencées 2 sur la figure 1, montant dans le laveur 100 depuis le conduit 200. On comprend que les fumées 2 sont constituées des fumées 1 circulant dans le conduit 2, après que ces fumées 1 aient été admises à l'intérieur du laveur 100 et dès lors que ces fumées se trouvent en amont du plateau 400 à l'intérieur du laveur 100, c'est-à-dire entre le débouché du conduit 200 et le plateau 400.

Le plateau 400 est pourvu de perforations 402, qui relient l'une à l'autre sa face supérieure et sa face inférieure et qui sont réparties de manière sensiblement homogène dans le plateau : ces perforations 402 permettent aux fumées 2, c'est-à-dire aux fumées circulant vers le haut dans le laveur 100 depuis le débouché du conduit 200 jusqu'au plateau 400, de traverser ce plateau pour en atteindre la face supérieure d'où les fumées, référencées 3, poursuivent leur écoulement ascendant vers le dispositif de distribution 300. Là encore, on comprend que les fumées 3 sont constituées des fumées 2 après que ces fumées aient traversé le plateau 400 via les perforations 402, ces fumées 3 se trouvant ainsi en aval du corps 101 à l'intérieur du laveur 100, c'est-à-dire entre la face supérieure du plateau et le dispositif de distribution 300. La pluie P circule à contre-courant des fumées 3 montant à l'intérieur du laveur 100, de sorte que, au contact de l'eau constituant la pluie P, ces fumées 3 sont épurées par transfert dans cette eau des polluants que ces fumées contiennent, en particulier du dioxyde de soufre qu'elles contiennent. Les fumées ainsi épurées, référencées 4, sont évacuées du laveur 100, au travers du sommet 103 du laveur.

Comme bien montré sur la figure 1, le plateau 400 et, par-là, sa face supérieure sont inclinés par rapport à l'horizontale, si bien que l'eau de la pluie P, une fois tombée sur cette face supérieure du plateau 400, ruisselle sur cette dernière en formant un film d'eau F. On comprend que la formation et le ruissellement du film d'eau F résultent de l'inclinaison de la face supérieure du plateau 400, ainsi que de la gravité. Ce film F présente une épaisseur comprise typiquement entre 3 et 50 mm. Le film F recouvre la face supérieure du plateau 400, en recouvrant au moins partiellement le débouché supérieur des perforations 402, comme bien visible sur la figure 1. En pratique, le débouché supérieur des perforations 402 est à cet effet prévu pour affleurer la face supérieure du plateau 400. L'eau du film F ruisselle ainsi sur la face supérieure du plateau 400 depuis une partie haute 400A du plateau, jusqu'à une partie basse 400B du plateau. La partie haute 400A du plateau, qui est tournée vers la droite sur les figures 1 et 2, constitue la partie le plus haute du plateau, c'est-à-dire la partie qui plus haute que le reste du plateau. Autrement dit, cette partie 400A occupe la région sommitale du plateau 400. La partie la plus basse 400B du plateau, qui est tournée vers la gauche sur les figures 1 et 2, constitue la partie la plus basse du plateau, c'est-à-dire la partie qui est plus basse que le reste du plateau. Dans l'exemple de réalisation montré aux figures, cette partie basse 400B inclut un bord d'extrémité inférieure 403 du plateau 400, d'où l'eau est évacuée du plateau, comme décrit plus en détail par la suite, puis est sortie du laveur 100, notamment depuis le fond 101, en étant optionnellement recyclée au dispositif de distribution 300 de manière non représentée sur la figure 1.

Dans l'exemple illustré aux figures, la partie haute 400A du plateau 400 est située à l'aplomb vertical du débouché du conduit 200 dans le laveur 100. Cela revient à dire que la partie basse 400B du plateau est opposée à l'entrée des fumées 1 dans le laveur. Ceci étant, cette disposition n'est pas limitative. En particulier, un agencement inverse peut être prévu.

Au niveau de la face supérieure du plateau 400, l'écoulement du film d'eau F n'est pas tranquille, puisque cet écoulement est bien sûr perturbé par le passage ascendant des fumées dans les perforations 402. En particulier, la rencontre entre l'écoulement des fumées sortant des perforations 402 et l'eau du film F ruisselant sur le plateau 400 génère des jets J projetés au-dessus du plateau 400 depuis la face supérieure de ce dernier, comme indiqué schématiquement sur la figure 1 : ces jets J, qui peuvent aussi être vu comme des geysers et par lesquels un contact intense entre les fumées et l'eau est réalisé, contribuent de manière incrémentale mais significative aux performances d'épuration de l'installation. En pratique, l'eau du film F ne s'écoule pas au travers du plateau 400 par les perforations 402, sauf pour, le cas échéant, une part marginale de cette eau, qui peut être qualifiée de pleurage et qui est typiquement inférieure à 10%, voire à 5%. L'eau du film F est empêchée de s'écouler dans les perforations 402 par l'écoulement de fumées dans les perforations 402, dès lors que la vitesse de cet écoulement est suffisamment élevée. A titre d'exemple non-limitatif, lorsque les fumées 2 et 3 circulent à une vitesse moyenne comprise entre 3 et 7 m/s, cette vitesse des fumées dans les perforations 402 est ainsi prévue supérieure à 5 m/s, de préférence 8 m/s, voire de préférence 10 m/s, sans toutefois excéder 25 m/s, de préférence 15 m/s, pour ne pas accentuer le différentiel de vitesse de part et d'autre du plateau. La vitesse moyenne précitée correspond au débit des fumées 2 et 3, divisé par la section transversale du laveur 100.

Il faut bien réaliser ici toute la différence qu'il y a entre le plateau 400 et un plateau de distillation : les vitesses des flux gazeux dans un plateau de distillation opérant sous pression atmosphérique dépassent rarement 1 à 2 m/s, alors que les laveurs marins opèrent usuellement, pour des raisons économiques, avec des vitesses dépassant 3 m/s. Une telle vitesse crée un phénomène d'entrainement néfaste, voire d'engorgement, inadmissible en distillation, mais tolérable pour des laveurs marins. Autrement dit, le plateau 400 peut être vu comme se comportant, dans une certaine mesure, comme un plateau de distillation, mais qui opèrerait au-delà de son point d'engorgement : du point de vue de la distillation, un tel régime est inacceptable, car un entraînement de liquide vers le haut par des jets tels que les jets J contaminerait les plateaux de proche en proche. Dans le cas de l'installation conforme à l'invention, ceci est sans conséquence puisque le plateau 400 est en unique exemplaire et que des entraînements d'eau par les jets J, qui se propageraient au-dessus du dispositif de distribution 300, sont acceptables, en étant, le cas échéant, interceptés par un séparateur de gouttes, agencé, de manière non représenté sur les figures, au sommet 103 du laveur 100.

En plus de contribuer au transfert gaz-liquide à l'intérieur du laveur 100, le plateau 400 homogénéise le profil de vitesse des fumées 3, en répartissant de manière sensiblement homogène sur la section transversale du laveur 100 les fumées circulant de manière ascendante dans le laveur. En effet, le plateau 400 induit une perte de charge pour les fumées circulant dans le laveur. Plus précisément, cette perte de charge résulte de l'écoulement des fumées 2 au travers de, successivement, le plateau 400, via les perforations 402, et le film F, en formant les jets J. La perte de charge générée, qui peut être comprise entre 50 Pa et 800 Pa, de préférence entre 100 Pa et 400 Pa, assure une homogénéisation du profil de vitesse des fumées immédiatement en aval du plateau 400, autrement dit au-dessus de ce plateau à l'intérieur du laveur 100. Il y a lieu de noter que sans cette perte de charge, la maldistribution aéraulique des fumées 2, résultant notamment de l'admission par le conduit 200 des fumées 1 latéralement au laveur 100, se retrouverait sur toute la hauteur du laveur 100, en ayant même tendance à s'aggraver au fur et à mesure que les fumées progressent jusqu'au dispositif de distribution 300 car les gouttes de la pluie P ont tendance à rabattre les fumées sur un côté du laveur afin de s'écouler plus facilement sur le côté opposé. A l'inverse, grâce à la perte de charge induite par le plateau 400, la maldistribution aéraulique des fumées 2 est corrigée en aval du plateau 400, en redressant le profil de vitesse des fumées 3, si bien que ces fumées 3 sont réparties de manière sensiblement homogène sur la section transversale du laveur 100. Le lavage des fumées 3 est ainsi opéré de manière performante : en particulier, le taux d'épuration des fumées 3 est maîtrisé, dans le sens où, sur sensiblement toute la section transversale du laveur 100, le rapport local entre le flux massique d'eau de la pluie P et le flux des fumées 3 est homogène et le temps de contact entre l'eau de la pluie P et les fumées 3 est également homogène.

En pratique, les fumées 2 doivent effectivement alimenter les perforations 402, sans bypasser le plateau 400, c'est-à-dire sans passer en aval de ce plateau 400 autrement qu'après l'avoir traversé par les perforations 402. Diverses possibilités constructives sont envisageables pour éviter ce bypass du plateau 400 par les fumées 2 ou au moins par l'essentiel de ces fumées 2, les spécificités des arrangements correspondants n'étant donc pas limitatives de l'invention.

Suivant une forme de réalisation pratique et avantageuse, qui est mise en œuvre dans l'exemple de réalisation des figures 1 et 2, le bord d'extrémité inférieure 403 du plateau 400 est horizontalement distant d'une portion périphérique de la paroi latérale 102 du laveur 100, en délimitant entre cette portion périphérique et le bord 403 un passage 404. Le plateau 400 recouvre ainsi toute la section transversale du laveur 100, hormis le passage 404. L'eau évacuée de la face supérieure du plateau 400 s'écoule vers le bas par le passage 404, en couvrant ce dernier vis-à-vis des fumées 2.

Une autre forme de réalisation pour éviter de bypasser la plateau 400, qui n'est pas illustrée aux figures, est de prévoir, sur le bord d'extrémité inférieure 403 du plateau 400, un joint hydraulique qui est alimenté par l'eau évacuée du plateau et qui forme un barrage hydraulique, étanche aux fumées 2. Le principe d'un tel joint hydraulique est connu en soi, en étant par exemple utilisé en distillation.

Encore une autre possibilité est de prolonger la partie basse 400B du plateau jusqu'à la paroi latérale 102 du laveur, en veillant à ce que l'évacuation de l'eau du film F puisse être opérée au travers de passages traversants ad hoc de cette partie basse 400B, en évitant tout engorgement.

Par ailleurs, dans la pratique, les effets du plateau 400, qui ont été décrits jusqu'ici, sont liés à divers paramètres structurels et opératoires de l'installation, sur lesquels l'homme du métier peut et sait jouer. Ces divers paramètrent incluent, entre autres, le débit des fumées 1, le débit d'eau distribuée par le dispositif de distribution 300, le dimensionnement individuel et collectif des perforations 402, l'inclinaison du plateau 400, la rugosité de la face supérieure du plateau 400, etc. Ainsi, suivant un dimensionnement préférentiel, le diamètre équivalent de chaque perforation 402, défini comme le rapport de quatre fois la section transversale de la perforation sur le périmètre de cette dernière, est compris entre 50 et 120 mm, de préférence entre 60 et 80 mm, étant remarqué que la géométrie de la section transversale des perforations n'est pas limitative, en pouvant par exemple être ronde, rectangulaire ou autre. Egalement suivant un dimensionnement préférentiel, le taux de vide pour le plateau 400, c'est-à-dire le cumul des volumes respectifs des perforations 402 vis-à-vis du volume total du plateau 400, est compris entre 20 et 50%, de préférence entre 35 et 50 %. De même, suivant une disposition avantageuse, l'inclinaison du plateau 400 par rapport à l'horizontale est inférieure à 20°, de préférence comprise entre 5° et 15° : une telle valeur d'inclinaison garantit la formation et l'écoulement satisfaisants du film d'eau F, sans augmenter significativement la hauteur totale du laveur 100.

Selon une caractéristique de l'invention visant à améliorer ses performances de lavage des fumées 1, l'installation comporte un dispositif de récupération 500 qui permet d'utiliser astucieusement l'eau du film L ruisselant sur la paroi latérale 102 du laveur 100. Comme bien visible sur la figure 1, ce dispositif de récupération 500 est agencé en totalité à l'intérieur du laveur, en étant situé, à la fois, au-dessus du plateau 400 et en dessous du dispositif de distribution 300. En particulier, pour des raisons qui apparaîtront plus loin, le dispositif de récupération 500 est préférentiellement situé plus près du plateau 400 que du dispositif de distribution 300. Par ailleurs, comme bien visible sur la figure 2, le dispositif de récupération 500 court sur la paroi latérale 102 du laveur 100 suivant une direction périphérique au laveur. En pratique, le dispositif de récupération 500 est fixé à la paroi latérale 102 par tout moyen approprié, en étant ainsi porté en saillie par la face intérieure de la paroi latérale 102. Dans l'exemple de réalisation considéré sur les figures, le dispositif de récupération 500 s'étend ainsi tout autour du laveur 100, bien que cette disposition préférentielle ne soit pas limitative de l'invention du moment que le dispositif de récupération 500 fait au moins partiellement le tour du laveur 100.

Suivant la direction périphérique au laveur, le dispositif de récupération 500 inclut successivement une partie collectrice 510 et un déversoir 520. Comme bien visible sur la figure 1, le déversoir 520 est situé à l'aplomb vertical de la partie haute 400A du plateau 400 et, comme bien visible sur la figure 2, ce déversoir s'étend, suivant la direction périphérique au laveur, sur une portion correspondante de la paroi latérale 102 du laveur 100. Suivant la direction périphérique au laveur, la partie collectrice 510 s'étend, quant à elle, sur une portion correspondante distincte de la paroi latérale 102 et, à la jonction entre les portions précitées de la paroi latérale 102, se raccorde directement au déversoir 520. Suivant un dimensionnement avantageux, qui est mis en œuvre dans les exemples de réalisation considérés aux figures, la partie collectrice 510 représente au moins la moitié du dispositif de récupération 500 suivant la direction périphérique au laveur.

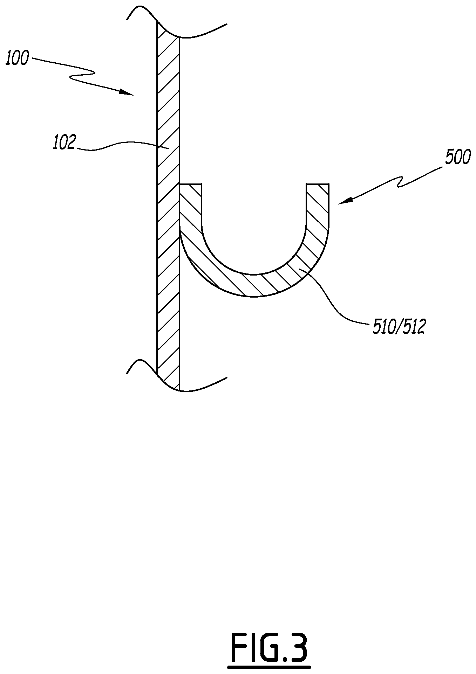

La partie collectrice 510 est conçue pour recevoir et canaliser, à la façon d'une gouttière, de l'eau du film L, c'est-à-dire de l'eau ruisselant depuis la paroi latérale 102 du laveur 100. A cet effet, comme bien visible sur les figures 1 et 3, la partie collectrice 510 comporte principalement un corps 512 qui est façonné de manière que l'eau ruisselant depuis la paroi latérale 102 pénètre par écoulement gravitaire dans ce corps 512, puis y est retenue pour s'écouler jusqu'au déversoir 520. Dans la forme de réalisation illustrée sur la figure 3, le corps 512 est prévu essentiellement semi-cylindrique, en étant ouvert vers le haut : plus précisément, ce corps 512 inclut une base semi-cylindrique, rehaussée de bords supérieurs verticaux, qui sont situés de part et d'autre de la base semi-cylindrique et dont l'un est placé contre la face intérieure de la paroi latérale 102 du laveur 20.

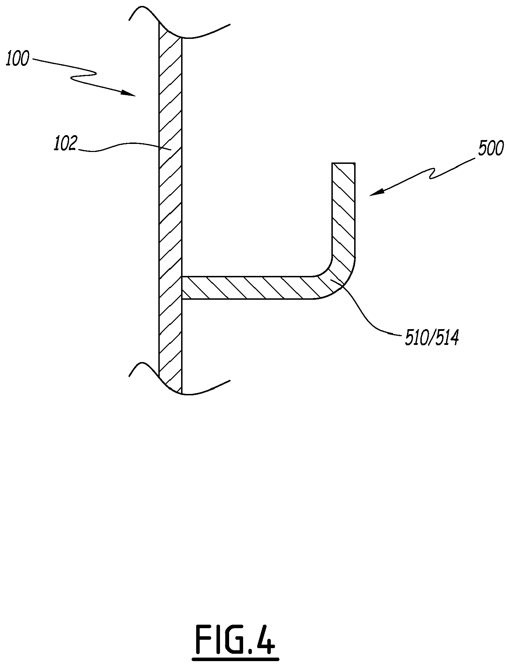

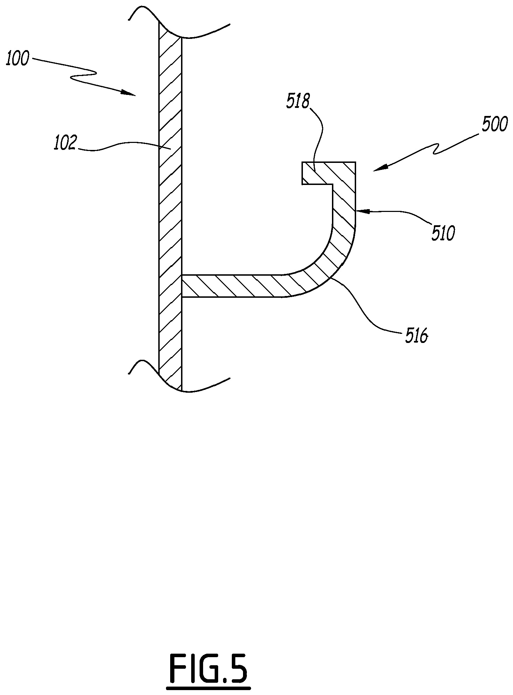

D'autres formes de réalisation du corps de la partie collectrice 110 sont envisageables. Ainsi, sur la figure 4, le corps de la partie collectrice 510 porte la référence 514 et comprend un fond plat, qui s'étend en saillie depuis la face intérieure de la paroi latérale 102 et qui, à l'opposé de cette paroi latérale 102, est bordé d'un rebord plein qui est coudé verticalement vers le haut. Un autre exemple de réalisation est montré à la figure 5, sur laquelle le corps de la partie collectrice 510 porte la référence 516 et comprend un fond plat et un rebord plein, similaires à ceux décrits en regard de la figure 4, à la différence que le rebord plein du corps 516 se termine par un rabat 518 tourné vers la paroi latérale 102 du laveur 100. Ce rabat évite que le liquide canalisé dans la partie collectrice 510 ne se déverse en dehors du corps 516 avant d'atteindre le déversoir 520.

Quelle que soit la forme de réalisation du corps 512, 514 ou 516 de la partie collectrice 510, ce corps est avantageusement dimensionné pour recevoir et canaliser l'eau ruisselant depuis la paroi latérale 102 du laveur 100, sans trop perturber les transferts gaz-liquide à l'intérieur du laveur 100. A cet effet, le corps de la partie collectrice 510 présente préférentiellement une hauteur, c'est-à-dire une dimension verticale, comprise entre 50 mm et 200 mm. Quant à la largeur de ce corps, c'est-à-dire sa dimension horizontale en saillie de la paroi latérale 102, elle est préférentiellement comprise entre 100 et 400 mm, voire entre 200 et 300 mm.

Quelles que soient les spécificités structurelles de la partie collectrice 510, cette dernière est en pente suivant la direction périphérique au laveur 100. Autrement dit, la partie collectrice 510 est inclinée par rapport à un plan horizontal, en s'enroulant sur la paroi latérale 102 du laveur 100 à la façon d'une portion d'hélice. Cette inclinaison permet que l'eau canalisée dans la partie collectrice 510 s'y écoule par effet de pente. Suivant un dimensionnement préférentiel, la pente de la partie collectrice 510 est comprise entre 3 et 15 %, de préférence entre 5 et 10 %, ce qui évite des constructions ou des dépôts de particules solides dans la partie collectrice 510, qui risqueraient de boucher celle-ci, et ce qui assure un transport rapide de l'eau, en limitant les contraintes de supportage pour la partie collectrice 510.

Le déversoir 520 est, quant à lui, conçu pour, à l'intérieur du laveur 100, déverser sur la partie haute 400A du plateau 400 l'eau canalisée dans la partie collectrice 510, en distribuant cette eau sur la partie haute 400A du plateau, comme indiqué schématiquement par la flèche C sur la figure 1. A cet effet, plusieurs formes de réalisation sont envisageables pour le déversoir 520.

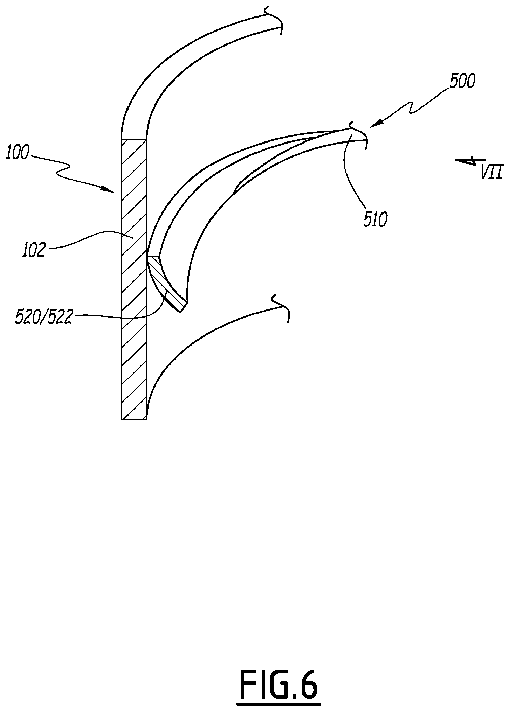

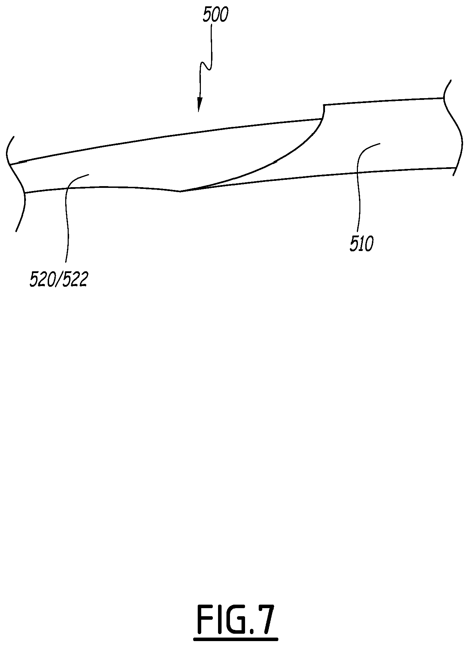

Dans la forme de réalisation illustrée par les figures 2, 6 et 7, le déversoir 520 comporte un corps 522 qui, à l'intérieur du laveur, prolonge la partie collectrice 510, tout en étant tronqué sur le côté de ce corps tourné vers l'intérieur du laveur 100. Comme illustré sur les figures 2, 6 et 7, le troncage du corps 512 peut avantageusement être prévu progressivement croissant lorsqu'on parcourt le déversoir 520 en s'éloignant de la partie collectrice 510.

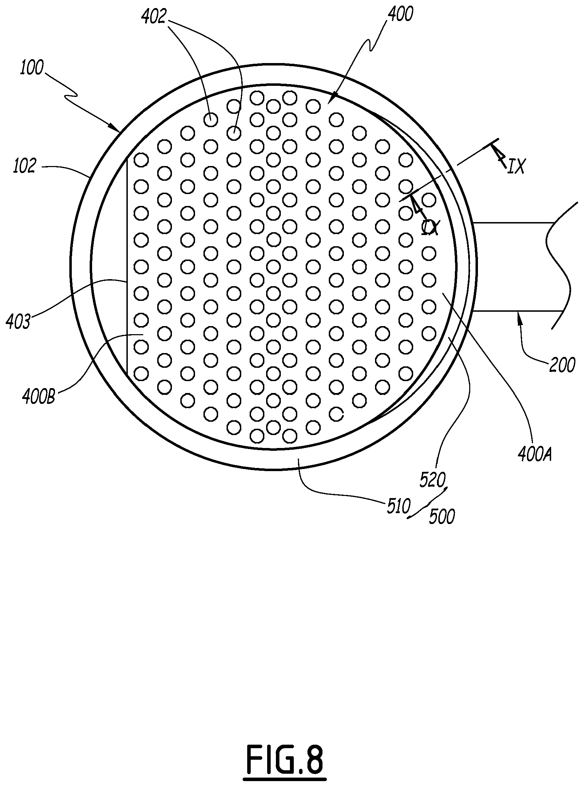

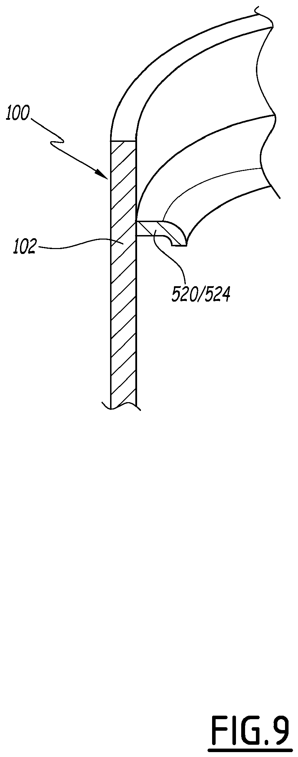

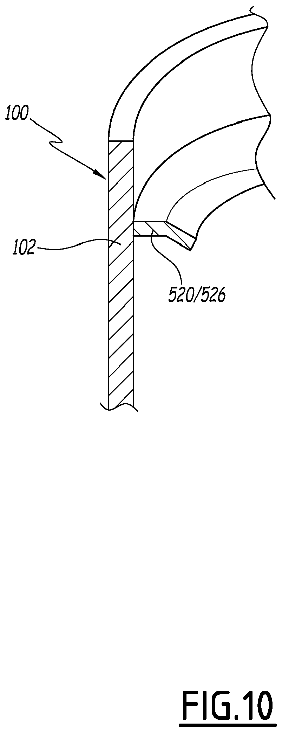

Dans la forme de réalisation alternative illustrée aux figures 8 et 9, le déversoir 520 comporte un corps 524 qui est agencé à l'intérieur du laveur 100 et qui, sur son côté tourné vers l'intérieur du laveur 100, est courbé vers le bas. La forme de réalisation illustrée à la figure 10 est une variante de celle des figures 8 et 9, dans laquelle un corps 526 du déversoir 520 est, sur son côté tourné vers l'intérieur du laveur 100, plié vers le bas. Pour ces deux formes de réalisation, la largeur du corps 524 ou 526 est avantageusement prévue pour se réduire progressivement lorsqu'on parcourt le déversoir 520 en s'éloignant de la partie collectrice 510.

Quelle que soit la forme de réalisation du déversoir 520, ce dernier est préférentiellement prévu pour, suivant la direction périphérique au laveur, s'étendre sensiblement à l'horizontale. De cette façon, l'eau distribuée par le déversoir 520 en est déversée sur une grande étendue de son corps et de manière sensiblement homogène suivant la direction périphérique au laveur, à la façon d'une cascade.

De même, quelle que soit la forme de réalisation du déversoir 520, ce dernier représente entre 20 et 49%, de préférence entre 30 et 40%, du dispositif de récupération 500 suivant la direction périphérique au laveur 100. De cette façon, l'étendue de son corps est substantielle aux fins de la distribution de l'eau sur la partie haute 400A du plateau, qui occupe une portion correspondante de la périphérie intérieure du laveur 100.

Quelles que soient les spécificités de la partie collectrice 510 et du déversoir 520, le dispositif de récupération 500 permet ainsi d'amener de l'eau depuis le film L ruisselant sur la paroi latérale 102 du laveur 100, jusqu'à la partie haute 400A du plateau 400, c'est-à-dire la zone du plateau depuis laquelle l'eau ruisselle, au sein du film L, sur tout le plateau jusqu'à la partie basse 400B de ce dernier. En l'absence du dispositif de récupération 500, le film F serait constitué exclusivement par la pluie P atteignant directement le plateau 400, si bien que la partie haute 400A du plateau ne recevrait que la portion de la pluie P, tombant directement sur cette partie haute 400A, tandis que le reste du plateau, en particulier sa partie basse 400B, recevrait, à la fois, la portion de la pluie P, tombant directement sur le reste du plateau, et le flux ruisselant depuis de la partie haute 400A du plateau. Grâce au dispositif de récupération 500, davantage d'eau est amené sur la partie haute 400A du plateau, ce qui est particulièrement intéressant puisque c'est l'eau ruisselant sur tout le plateau depuis sa partie haute 400A qui bénéficie du temps de séjour maximal sur le plateau. Les possibilités d'échange, au niveau des jets J entre les fumées 2 et l'eau collectée et déversée par le dispositif de récupération 500, sont ainsi renforcées.

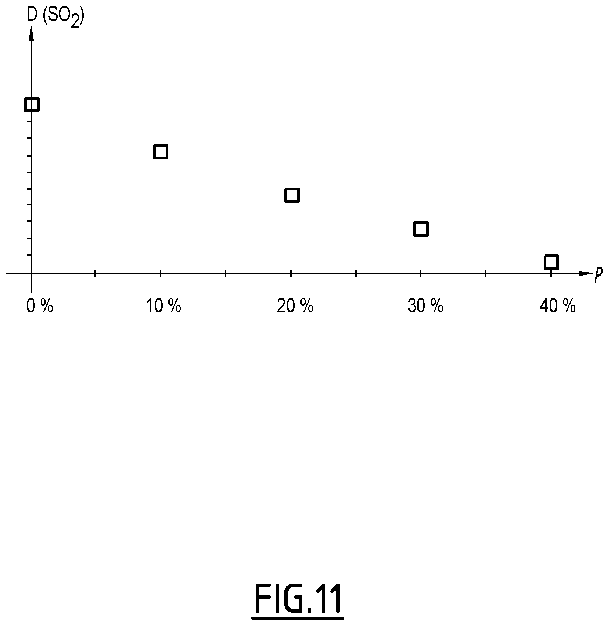

Le graphique de la figure 11 illustre l'amélioration des performances de lavage des fumées 1 par l'installation et le procédé conformes à l'invention. Ce graphique est le résultat d'une simulation de fonctionnement du plateau 400. Le graphique représente le débit D(SO₂) du dioxyde de soufre présent dans les fumées immédiatement en aval du plateau 400, autrement dit dans les jets J, en fonction de la proportion P d'eau récupérée par le dispositif de récupération 500 sur la totalité de l'eau prévue d'être introduite dans le laveur 100 par le dispositif de distribution 300. Par souci de clarté de la figure 11, l'échelle des ordonnées n'est pas quantifiée, étant entendu qu'elle est linéaire. Lorsque cette proportion P est nulle, cela revient à considérer que le dispositif de récupération 500 est absent. Dès lors que cette proportion P est non-nulle, le débit D(SO₂) est abaissé comparativement à sa valeur où P est nulle, ce qui correspond à une diminution de la quantité de dioxyde de soufre en aval du plateau 400. Les effets du dispositif de récupération 500 sur la baisse du débit D(SO₂) sont d'autant plus marqués que la proportion P augmente. En particulier, pour une proportion P de 30 %, ce qui correspond à une situation couramment constatée pour les laveurs marins en conditions normales de fonctionnement, la teneur en dioxyde de soufre des fumées peut ainsi être abattue d'environ 10% supplémentaires grâce au dispositif de récupération 500.

## Revendications

1. Installation d'épuration par voie humide de fumées d'échappement d'un moteur d'un navire marin, laquelle installation comprend :
- un laveur (100), à la base duquel un conduit (200) d'admission de fumées débouche à l'intérieur du laveur et qui comporte une paroi latérale (102) s'élevant sensiblement à la verticale et délimitant une section transversale intérieure du laveur,
- un dispositif de distribution (300), qui est agencé à l'intérieur du laveur et qui est adapté pour distribuer de l'eau sous forme d'une pluie (P) qui tombe vers le bas dans le laveur en couvrant sensiblement toute la section transversale du laveur,
- un plateau (400), qui est agencé à l'intérieur du laveur, en étant situé entre le débouché du conduit et le dispositif de distribution, et qui est incliné par rapport à l'horizontale de sorte que l'eau de la pluie tombe sur le plateau et y forme un film d'eau (F) qui ruisselle sur le plateau depuis une partie haute (400A) du plateau jusqu'à une partie basse (400B) du plateau, lequel plateau est muni de perforations (402) de sorte que les fumées (2) montant dans le laveur depuis le conduit traversent le plateau via les perforations en étant, à la fois, réparties de manière sensiblement homogène sur la section transversale du laveur et mises en contact avec le film d'eau de manière à former des jets (J) projetés au-dessus du plateau, et
- un dispositif de récupération (500), qui est agencé en totalité à l'intérieur du laveur, en étant situé entre le plateau et le dispositif de distribution, et qui court sur la paroi latérale du laveur suivant une direction périphérique au laveur, en incluant successivement :
- une partie collectrice (510), qui est en pente suivant la direction périphérique au laveur et qui reçoit et canalise de l'eau ruisselant depuis la paroi latérale du laveur, et
- un déversoir (520), qui est situé à l'aplomb vertical de la partie haute du plateau et qui, à l'intérieur du laveur, déverse et distribue sur cette partie haute du plateau l'eau canalisée dans la partie collectrice.

2. Installation suivant la revendication 1, dans laquelle la pente de la partie collectrice (510) est comprise entre 3 et 15 %.

3. Installation suivant la revendication 1, dans laquelle la pente de la partie collectrice (510) est comprise entre 5 et 10 %.

4. Installation suivant l'une quelconque des revendications précédentes, dans laquelle la partie collectrice (510) représente au moins la moitié du dispositif de récupération (500) suivant la direction périphérique au laveur (100).

5. Installation suivant l'une quelconque des revendications précédentes, dans laquelle le déversoir (520) représente entre 20 et 49% du dispositif de récupération (500) suivant la direction périphérique au laveur (100).

6. Installation suivant l'une quelconque des revendications précédentes, dans laquelle le déversoir (520) représente entre 30 et 40% du dispositif de récupération (500) suivant la direction périphérique au laveur (100).

7. Installation suivant l'une quelconque des revendications précédentes, dans laquelle la partie collectrice (510) comporte un corps (512 ; 514 ; 516) qui est façonné de manière que l'eau ruisselant depuis la paroi latérale (102) du laveur (100) y pénètre par écoulement gravitaire, puis y est retenue en s'écoulant sous l'effet de pente jusqu'au déversoir (510), ce corps de la partie collectrice étant, par exemple, essentiellement semi-cylindrique ou bien prévu avec un fond plat bordé d'un rebord plein qui est tourné vers le haut.

8. Installation suivant l'une quelconque des revendications précédentes, dans laquelle le déversoir (520) s'étend, suivant la direction périphérique au laveur (100), sensiblement à l'horizontale.

9. Installation suivant l'une quelconque des revendications précédentes, dans laquelle le déversoir (520) comporte un corps (522) qui prolonge la partie collectrice (510) tout en étant tronqué sur son côté tourné vers l'intérieur du laveur (100).

10. Installation suivant l'une quelconque des revendications 1 à 8, dans laquelle le déversoir (520) est, sur son côté tourné vers l'intérieur du laveur (100), courbé ou plié vers le bas.

11. Installation suivant l'une quelconque des revendications précédentes, dans laquelle le plateau (400) est incliné par rapport l'horizontale avec un angle inférieur à 20°.

12. Installation suivant l'une quelconque des revendications précédentes, dans laquelle le plateau (400) est incliné par rapport l'horizontale avec un angle compris entre 5° et 15°.

13. Installation suivant l'une quelconque des revendications précédentes, dans laquelle le dispositif de récupération (500) s'étend tout autour du laveur (100).

14. Procédé d'épuration par voie humide de fumées d'échappement d'un moteur d'un navire marin, procédé dans lequel :
- les fumées d'échappement d'un moteur d'un navire marin sont admises à la base d'un laveur (100) qui comporte une paroi latérale (102) s'élevant sensiblement à la verticale et délimitant une section transversale intérieure du laveur, les fumées circulant de manière ascendante à l'intérieur du laveur,
- les fumées circulant dans le laveur sont réparties de manière sensiblement homogène sur la section transversale du laveur par un plateau (400), qui est agencé à l'intérieur du laveur, en étant incliné par rapport à l'horizontale, et qui est muni de perforations (402) par lesquelles les fumées traversent le plateau,
- de l'eau est distribuée à l'intérieur du laveur sous forme d'une pluie (P), qui tombe vers le bas en couvrant sensiblement toute la section transversale du laveur, jusqu'au plateau sur lequel l'eau forme un film d'eau (F) qui ruisselle depuis une partie haute (400A) du plateau jusqu'à une partie basse (400B) du plateau et avec lequel les fumées sortant des perforations sont mises en contact de manière à former des jets (J) projetés au-dessus du plateau,
- une partie de la pluie (P) atteint la paroi latérale du laveur et y ruisselle jusqu'à une partie collectrice (510) d'un dispositif de récupération (500) qui est agencé en totalité à l'intérieur du laveur (100) et court sur la paroi latérale du laveur suivant une direction périphérique au laveur, la partie collectrice étant en pente suivant la direction périphérique au laveur, et
- l'eau atteignant la partie collectrice y est reçue et canalisée jusqu'à un déversoir (520) du dispositif de récupération (500), qui est situé à l'aplomb vertical de la partie haute du plateau et qui, à l'intérieur du laveur, déverse et distribue sur cette partie haute du plateau l'eau canalisée dans la partie collectrice.
